# EUROPEAN PATENT APPLICATION

(11) **EP 4 625 952 A1**
(43) Date of publication of application: **01.10.2025**
(21) Application number: 24755823.2
(22) Date of filing: 03.01.2024
(51) Int. Cl.: H04M 1/02

(54) **HINGE MECHANISM AND ELECTRONIC DEVICE**

(30) Priority: 15.02.2023 CN 202310164109
(71) Applicant: ZTE Corporation, Shenzhen, Guangdong 518057 (CN)
(72) Inventor: YANG, Xiao, Shenzhen, Guangdong 518057 (CN)
(74) Representative: Ziebig Hengelhaupt Intellectual Property Attorneys Patentanwaltskanzlei PartGmbB
(86) International application number: PCT/CN2024/070401
(87) International publication number: WO 2024/169447

(57) **Abstract**

A hinge mechanism (100) and an electronic device. The hinge mechanism (100) comprises a first synchronization member (31), a second synchronization member (32), a connecting member (33), and an elastic assembly (34). A first protruding portion is provided on one side of the first synchronization member (31), and a gear structure is formed on the first protruding portion. A second protruding portion is provided on one side of the second synchronization member (32), and a gear structure is formed on the second protruding portion. The connecting member (33) is rotatably connected to the first synchronization member (31) and the second synchronization member (32), the rotation axis of the first synchronization member (31) is parallel to that of the second synchronization member (32), and the gear structure of the first protruding portion is engaged with the gear structure of the second protruding portion. The elastic assembly (34) abuts against at least one of the first synchronization member (31) and the second synchronization member (32), and is used for generating elastic deformation in the extension direction of the rotation axis of the first synchronization member (31) during rotation of the first synchronization member (31) and the second synchronization member (32).

## Description

The present disclosure claims the priority of Chinese Patent Application No. 202310164109.8 filed on February 15, 2023, the entire content of which is incorporated in this application by reference.

### TECHNICAL FIELD

The present disclosure relates to the field of foldable device technologies, and in particular, to a hinge mechanism and an electronic device.

### BACKGROUND

With the continuous development of technologies, the number of foldable screen phones in the market is increasing, and the phones are gradually favored by consumers. A foldable screen phone generally needs a hinge mechanism to realize folding of the phone.

### SUMMARY

In an aspect, the embodiments of the present disclosure provide a hinge mechanism, including a first synchronous component, a second synchronous component, a connecting component, and an elastic assembly. A side of the first synchronous component has a first protrusion part, and the first protrusion part is formed with a gear structure. A side of the second synchronous component has a second protrusion part, and the second protrusion part is formed with a gear structure. The connecting component is rotationally connected with the first synchronous component and the second synchronous component, a rotation axis of the first synchronous component is parallel to a rotation axis of the second synchronous component, and the gear structure of the first protrusion part engages with the gear structure of the second protrusion part. The elastic assembly abuts against at least one of the first synchronous component and the second synchronous component, to generate elastic deformation along the extension direction of a rotation axis of the first synchronous component during rotation of the first synchronous component and the second synchronous component.

In another aspect, the embodiments of the present disclosure provide an electronic device, including a flexible screen and any of the aforementioned hinge mechanisms. The flexible screen is located on a side of the hinge mechanism, and a part of the flexible screen is connected with the first synchronous component and another part of the flexible screen is connected with the second synchronous component.

### BRIEF DESCRIPTION OF THE DRAWINGS

To better illustrate technical solutions in the present disclosure, the following is a brief introduction to drawings that need to be used in some embodiments of the present disclosure. Obviously, the drawings described below are merely drawings of some embodiments of the present disclosure, and for those ordinary skilled in the art, other drawings may also be obtained according to these drawings.
FIG. 1 is a schematic diagram of an overall structure of a hinge mechanism according to some embodiments.
FIG. 2 is a three-view of the hinge mechanism shown in FIG. 1 in an unfolded state.
FIG. 3 is a three-view of the hinge mechanism shown in FIG. 1 in a folded state.
FIG. 4 is a schematic diagram of an overall structure of the hinge mechanism shown in FIG. 1 on another side.
FIG. 5 is a schematic diagram of an internal structure of the hinge mechanism shown in FIG. 4.
FIG. 6 is a three-view and a bottom view of a synchronous torsion module according to some embodiments.
FIG. 7 is a three-view and a bottom view of the first synchronous component in FIG. 6.
FIG. 8 is a schematic diagram of an overall structure of a side of a first covering plate close to a fixing plate shown in FIG. 5.
FIG. 9 is a schematic diagram of an overall structure of a side of a second covering plate close to a fixing plate shown in FIG. 5.
FIG. 10 is a schematic diagram of an overall structure of the first covering plate shown in FIG. 8 on another side.
FIG. 11 is a schematic diagram of an overall structure of the second covering plate shown in FIG. 9 on another side.
FIG. 12 is a schematic diagram of a positional relationship of a first synchronous component and a second synchronous component with a fixing plate when a hinge mechanism is in a display state and a folded state.
FIG. 13 is a schematic diagram of an overall structure of a side of a first connecting plate and a second connecting plate close to a first synchronous component and a second synchronous component.
FIG. 14 is a schematic diagram of connection of a first synchronous connecting component with a first decorative plate and a second decorative plate.
FIG. 15 is a schematic diagram of an overall structure of a side of a first connecting plate and a side of a second connecting plate close to a first decorative plate and a second decorative plate.
FIG. 16 is a schematic diagram of an overall structure of a first synchronous connecting component according to some embodiments.
FIG. 17 is a schematic diagram of an overall structure when a first synchronous connecting component is installed on a fixing plate and a first connecting plate.
FIG. 18 is a schematic diagram of connection of a synchronous connecting assembly with a fixing plate.
FIG. 19 is a schematic diagram of an overall structure of a second synchronous connecting component according to some embodiments.
FIG. 20 is a schematic diagram of an overall structure of a third synchronous connecting component according to some embodiments.
FIG. 21 is a sectional view of a second synchronous connecting component and a third synchronous connecting component when a hinge mechanism is in an unfolded state and a folded state.

### Symbols in the drawings:

100-hinge mechanism; 10-support plate; 11-fixing plate; 12-first connecting plate; 121-first sliding groove; 13-second connecting plate; 131-second sliding groove; 132-fourth sliding groove; 14-first idler plate; 15-second idler plate; 20-decorative plate; 21-first decorative plate; 22-second decorative plate; 23-third decorative plate; 30-synchronous torsion module; 301-gear structure; 302-cam structure; 31-first synchronous component; 311-first protrusion part; 312-third protrusion part; 313-fifth clearance hole; 314-first abutting protrusion; 315-first slider 315; 32-second synchronous component; 321-second protrusion part; 322-fourth protrusion part; 324-second abutting protrusion; 325-second slider; 33-connecting component; 34-elastic assembly; 341-first clamping component; 342-second clamping component; 343-elastic component; 35-first connecting shaft; 351-first shaft body; 352-first fixing part; 353-second fixing part; 36-second connecting shaft; 361-second shaft body; 362-third fixing part; 363-fourth fixing part; 37-first connecting component; 371-first clearance hole; 372-second clearance hole; 38-second connecting component; 381-third clearance hole; 382-fourth clearance hole; 40-synchronous connecting assembly; 41-second synchronous connecting component; 411-third arc groove; 412-fourth limiting protrusion; 42-third synchronous connecting component; 421-first limiting protrusion; 422-second limiting protrusion; 50-covering plate; 501-first fixing groove; 502-second fixing groove; 503-positioning pillar; 504-covering plate-installing hole; 505-glue-dispensing groove; 506-second arc groove; 507-third limiting protrusion; 51-first covering plate; 52-second covering plate; 521-synchronous shaft; 60-screw; 71-first synchronous connecting component; 711-connecting slider; 712-first arc groove; 72-decorative plate-fixing block; 73-decorative plate-fixing piece.

### DETAILED DESCRIPTION

The following will provide a clear and complete description of the technical solutions in the present disclosure, in conjunction with the drawings in the present disclosure. Obviously, the described embodiments are only a part of the embodiments of the present disclosure, not all of the embodiments. Based on the embodiments of the present disclosure, all other embodiments obtained by those ordinary skilled in the art without making inventive efforts fall within the scope of protection of the present disclosure.

It should be noted that in the present disclosure, expressions such as "exemplarily/exemplary" or "for example/e.g.", are used to indicate examples, explanations, or illustrations. Any embodiment or design scheme described with "exemplarily/exemplary" or "for example/e.g." in the present disclosure should not be interpreted as being more preferred or advantageous than other embodiments or design schemes. Specifically, the use of words such as "exemplarily/exemplary" or "for example/e.g.", etc., is intended to present related concepts in detail.

The expressions of terms such as "first", "second", etc., are used below only for descriptive purposes, but cannot be interpreted as indicating or implying relative importance or implicitly indicating the number of the indicated technical features. Thus, features limited with "first" and "second" may explicitly or implicitly include one or more of the features.

In the description of the present disclosure, unless otherwise stated, "/" means "or", and for example, A/B may represent A or B. The term "and/or" herein merely describes an associated relationship between associated objects, and indicates that there are three relationships, and for example, A and/or B may mean: only A, only B, and both A and B. Additionally, "at least one" means one or more, and "many/multiple/plurality of" means two or more.

With the continuous development of technologies, the mobile phone industry is gradually developing towards foldable screen phones. According to different folding directions of the foldable screen phones, the foldable screen phones may be divided into inner-foldable screen phones and outer-foldable screen phones.

Compared with the inner-foldable screen phone, the outer-foldable screen phone may reduce an outer screen, so as to reduce the overall thickness of the foldable screen phone, and reduce the weight of the whole machine. However, compared with the inner-foldable screen phone, for the outer-foldable screen phone, more problems need to be considered.

A hinge mechanism of the foldable screen phone is relatively complex, generally includes a synchronous module and a torsion module and other components. The synchronous module may be used to realize synchronous rotation of the foldable screen phone, and the torsion module may be used to provide torsion during rotation, to improve the user experience.

However, the synchronous module and the torsion module of the foldable screen phone are generally modules independent with each other, and realize corresponding functions respectively, resulting in more parts of the hinge mechanism and a complex overall structure.

Based on this, the embodiments of the present disclosure provide an electronic device, and the electronic device is a device that can be folded and unfolded. Exemplarily, the electronic device may be a foldable screen phone. The electronic device may include a flexible screen and a hinge mechanism. The flexible screen is located on a side of the hinge mechanism and is connected with the hinge mechanism. The hinge mechanism can rotate, and the flexible screen may be folded and unfolded based on driving of the hinge mechanism.

It can be understood that the electronic device provided in the embodiments of the present disclosure may also include other components. For example, the electronic device may also include a housing, a processor, a battery and other components, which will not be further introduced here.

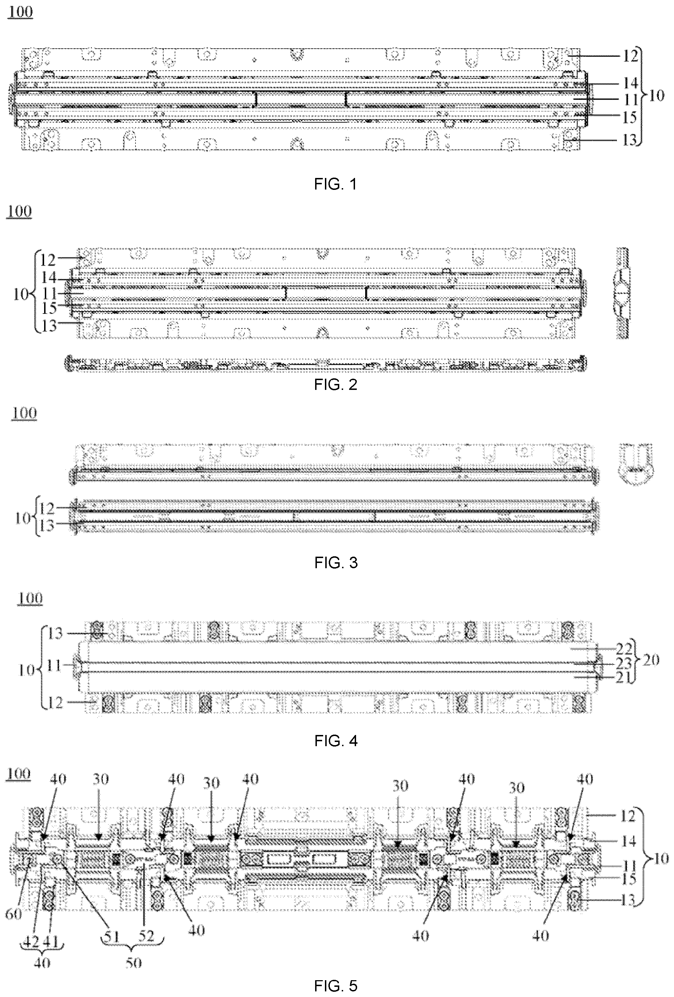

The following is a further introduction to the hinge mechanism in the electronic device provided in the embodiments of the present disclosure, as shown in FIG. 1. FIG. 1 is a schematic diagram of an overall structure of a hinge mechanism 100 according to some embodiments, and the hinge mechanism 100 may include a plurality of support plates 10, and the plurality of support plates 10 may be connected with a flexible screen (not shown in the figures), serving to support and fix the flexible screen.

It can be understood that the hinge mechanism 100 has an unfolded state and a folded state, as shown in FIG. 2. FIG. 2 is a three-view of the hinge mechanism 100 shown in FIG. 1 in an unfolded state, and when the hinge mechanism 100 is in the unfolded state, the plurality of support plates 10 are on a same plane, to form a support plane. In this way, the flexible screen may be located on this support plane, thereby maintaining a flat state.

As shown in FIG. 3, FIG. 3 is a three-view of the hinge mechanism 100 shown in FIG. 1 in a folded state, and when the hinge mechanism 100 is in the folded state, the whole of the hinge mechanism 100 is folded along a certain axis, and the plurality of support plates 10 form a plurality of planes, and exemplarily, as shown in FIG. 3, the plurality of support plates 10 form an arc surface roughly shaped like a semi-cylinder, and two planes. In this case, the flexible screen (not shown in the figures) may be located on the outside of the hinge mechanism 100 shown in FIG. 3, and surrounds the hinge mechanism 100, i.e., the electronic device may be an outer-foldable screen phone.

Exemplarily, the plurality of support plates 10 may be made of a titanium alloy material. Due to the lighter weight and higher strength of the titanium alloy material, it may reduce the weight of the hinge mechanism 100 and improve the strength of the hinge mechanism 100. Of course, the support plates 10 may also be made of other materials. For example, the support plates 10 may also be made of stainless steel and aluminum alloy components and other materials.

As shown in FIG. 4, FIG. 4 is a schematic diagram of an overall structure of the hinge mechanism 100 shown in FIG. 1 on another side, and the hinge mechanism 100 may also include a plurality of decorative plates 20. When the hinge mechanism 100 is in an unfolded state, the plurality of decorative plates 20 are located on a side of the plurality of support plates 10, to conceal the internal structure of the hinge mechanism 100.

As shown in FIG. 5, FIG. 5 is a schematic diagram of an overall structure of the hinge mechanism 100 shown in FIG. 4, and the hinge mechanism 100 may also include a synchronous torsion module 30 and a synchronous connecting assembly 40. When the hinge mechanism 100 is in an unfolded state, the synchronous torsion module 30 and the synchronous connecting assembly 40 may be located on a side of the plurality of support plates 10. The synchronous torsion module 30 and the synchronous connecting assembly 40 may connect with the plurality of support plates 10 and the plurality of decorative plates 20 (as shown in FIG. 4), so that the plurality of support plates 10 and decorative plates 20 (as shown in FIG. 4) rotate synchronously.

The following illustrates structures of the synchronous torsion module 30 and the synchronous connecting assembly 40, and a cooperation relationship with the support plate 10 and the decorative plate 20, in detail.

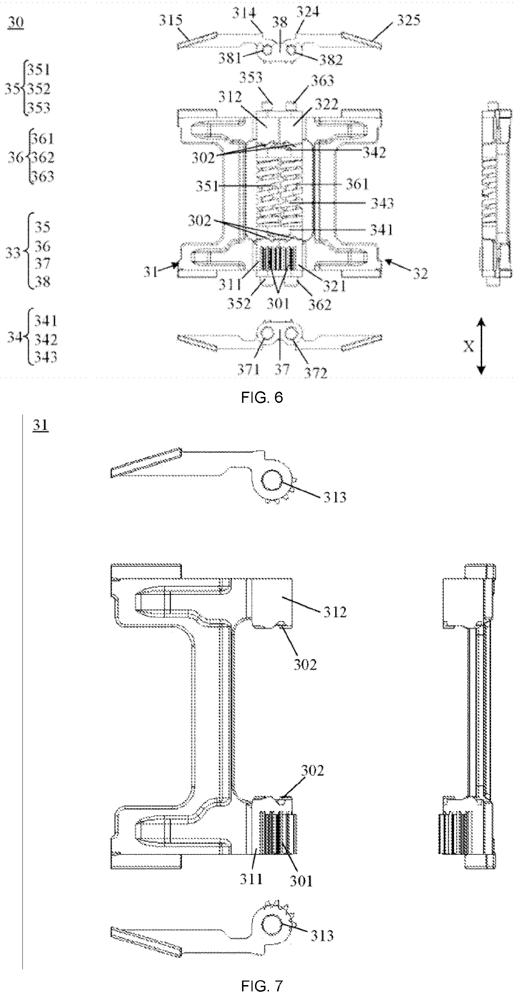

As shown in FIG. 6, FIG. 6 is a three-view and a bottom view of a synchronous torsion module 30 according to some embodiments, and the synchronous torsion module 30 may include a first synchronous component 31, a second synchronous component 32, a connecting component 33, and an elastic assembly 34. The connecting component 33 is rotationally connected with the first synchronous component 31 and the second synchronous component 32, and rotational axes of the first synchronous component 31 and the second synchronous component 32 are parallel. In this way, the first synchronous component 31 and the second synchronous component 32 may rotate with respect to the connecting component 33. Exemplarily, as shown in FIG. 6, the rotational axes of the first synchronous component 31 and the second synchronous component 32 are parallel to an X direction shown in FIG. 6.

Continuing to refer to FIG. 6, a side of the first synchronous component 31 has a first protrusion part 311, and the first protrusion part 311 is formed with a gear structure 301. Meanwhile, a side of the second synchronous component 32 has a second protrusion part 321, and the second protrusion part 321 is also formed with a gear structure 301. The gear structure 301 of the first protrusion part 311 engages with the gear structure 301 of the second protrusion part 321.

Thus, when one of the first synchronous component 31 and the second synchronous component 32 rotates around its own rotation axis, another of the first synchronous component 31 and the second synchronous component 32 may rotate synchronously, so as to realize the synchronous rotation of the first synchronous component 31 and the second synchronous component 32.

As shown in FIG. 6, the first synchronous component 31 and the second synchronous component 32 are arranged side by side. Sides of the first synchronous component 31 and the second synchronous component 32 that are close to each other engage with each other by the gear structure 301 of the first protrusion part 311 and the gear structure 301 of the second protrusion part 321, and other sides can move away from or toward each other during rotation, so as to realize the unfolding and folding between the first synchronous component 31 and the second synchronous component 32.

The first synchronous component 31 and the second synchronous component 32 may be connected with the support plates 10 (as shown in FIG. 5), so that the first synchronous component 31 may be connected with a part of the flexible screen and the second synchronous component 32 may be connected with another part of the flexible screen. In this way, when the first synchronous component 31 and the second synchronous component 32 rotate, the flexible screen may also rotate.

Thus, when the first synchronous component 31 and the second synchronous component 32 are connected with one of the plurality of support plates 10 respectively, the two support plates 10 can rotate synchronously, and since the support plate 10 may be connected with the flexible screen, i.e., a part of the flexible screen is connected with the first synchronous component 31 and another part of the flexible screen is connected with the second synchronous component 32, the flexible screen can rotate synchronously, so as to finally realize synchronous folding of the electronic device. Meanwhile, due to the good synchronization between the first synchronous component 31 and the second synchronous component 32, a neutral layer of the flexible screen and a neutral layer of the hinge mechanism 100 may be on a same plane, so that the neutral layer of the flexible screen is not affected, thereby guaranteeing the lifespan of the flexible screen.

Continuing to refer to FIG. 6, the elastic assembly 34 abuts against at least one of the first synchronous component 31 and the second synchronous component 32, to generate elastic deformation along an extension direction of the first synchronous component 31 and the rotation axis during the rotation of the first synchronous component 31 and the second synchronous component 32.

In this way, during the rotation of the first synchronous component 31 and the second synchronous component 32 around their own axes, the elastic assembly 34 may apply force to the first synchronous component 31 and the second synchronous component 32, so that a damping effect is generated during the rotation of the first synchronous component 31 and the second synchronous component 32, thereby improving the hand feeling of the electronic device during folding and unfolding, and then improving the user experience.

As shown in FIG. 6, the whole of the synchronous torsion module 30 may form a symmetrical structure. In this way, during folding of the whole of the synchronous torsion module 30, the rotation axis of the whole is located in the middle position, and the user has a better perception of the damping effect during the rotation.

Thus, for the hinge mechanism 100 provided in the embodiments of the present disclosure, the first synchronous component 31 and the second synchronous component 32 parallel to the rotation axis engage with each other by the gear structures 301 of the first protrusion part 311 and the second protrusion part 321, so as to realize synchronous folding and unfolding between the first synchronous component 31 and the second synchronous component 32. Meanwhile, the elastic assembly 34 that abuts against at least one of the first synchronous component 31 and the second synchronous component 32 may provide force during the synchronous rotation, so that damping force applied to the first synchronous component 31 and the second synchronous component 32 during the rotation, thereby improving the user's hand feeling during the folding, realizing the merging of the torsion module and the synchronization module, and then reducing the number of parts of the hinge mechanism 100 and simplifying the structure of the hinge mechanism 100.

In some embodiments, as shown in FIG. 6, a side on which the first protrusion part 311 of the first synchronous component 31 is located also has a third protrusion part 312. Along the extension direction of the rotation axis of the first synchronous component 31, the third protrusion part 312 and the first protrusion part 311 are arranged with an interval. A side on which the second protrusion part 321 of the second synchronous component 32 is located also has a fourth protrusion part 322. Along the direction of the rotation axis of the second synchronous component 32, the fourth protrusion part 322 and the second protrusion part 321 are arranged with an interval.

As shown in FIG. 6, a part of the elastic assembly 34 is located between the first protrusion part 311 and the third protrusion part 312, and abuts against the first protrusion part 311 and the third protrusion part 312. Another part of the elastic assembly 34 is located between the second protrusion part 321 and the fourth protrusion part 322, and abuts against the second protrusion part 321 and the fourth protrusion part 322. The elastic assembly 34 may be used to generate elastic deformation along the direction of the rotation axis of the first synchronous component 31, under pressure from the first protrusion part 311, the second protrusion part 321, the third protrusion part 312 and the fourth protrusion part 322.

As shown in FIG. 6, since the first protrusion part 311 and the third protrusion part 312 are arranged with an interval along the direction of the rotation axis of the first synchronous component 31, and the second protrusion part 321 and the fourth protrusion part 322 are arranged with an interval along the direction of the rotation axis of the second synchronous component 32, in this way, when the first protrusion part 311, the second protrusion part 321, the third protrusion part 312 and the fourth protrusion part 322 apply pressure to the elastic assembly 34, the elastic assembly 34 can generate elastic deformation along the extension direction of the rotation axis of the first synchronous component 31, so that the first synchronous component 31 and the second synchronous component 32 provide force to the user during the rotation, thereby improving the user's hand feeling during the rotation.

To ensure that the first synchronous component 31 and the second synchronous component 32 can apply force to the elastic assembly 34 during the rotation, in some embodiments, as shown in FIG. 6, both end faces of the first protrusion part 311 and the third protrusion part 312 that are close to each other have cam structures 302, and both end faces of the second protrusion part 321 and the fourth protrusion part 322 that are close to each other have cam structures 302.

The elastic component 34 may include a first clamping component 341, a second clamping component 342, and an elastic component 343. The first clamping component 341 abuts against the cam structure 302 of the first protrusion part 311 and the cam structure 302 of the second protrusion part 321. The elastic component 343 is located on a side of first clamping component 341 away from the first protrusion part 311 and the second protrusion part 321, and an end of the elastic component abuts against the first clamping component 341.

The second clamping component 342 is located on a side of the elastic component 343 away from the first protrusion part 311 and the second protrusion part 321, and abuts against another end of the elastic assembly 34. The second clamping component 342 abuts against the cam structure 302 of the third protrusion part 312 and the cam structure 302 of the fourth protrusion part 322.

In this way, during the rotation of the first synchronous component 31 and the second synchronous component 32, the first clamping component 341 and the second clamping component 342 will be located at different positions of the cam structures 302, so that the first clamping component 341 and the second clamping component 342 moves along the direction of the rotation axis of the first synchronous component 31, leading to elastic deformation of the elastic component 343 along the direction of the rotation axis of the first synchronous component 31.

It can be understood that the elastic component 343 is a component capable of generating elastic deformation. Exemplarily, as shown in FIG. 6, the elastic component 343 may be a spring, and the spring is clamped between the first clamping component 341 and the second clamping component 342.

The number of elastic components 343 may be set according to actual conditions. Exemplarily, as shown in FIG. 6, two springs are arranged between the first clamping component 341 and the second clamping component 342, and the first clamping component 341 and the second clamping component 342 clamp ends of the two springs, respectively. Of course, the number of elastic components 343 may also be one or another number.

In addition, it can be understood that, as shown in FIG. 7, FIG. 7 is a three-view and a bottom view of the first synchronous component 31 in FIG. 6, cam structures 302 on end faces of which the first protrusion part 311 and the third protrusion part 312 are close to each other, may be protruding structures arranged with intervals along circumferential direction around the rotation axis of the first synchronous component 31, and a recess is formed between adjacent protruding structures.

Similarly, cam structures 302 on end faces of the second protrusion part 321 and the fourth protrusion part 322 that are close to each other, are also protruding structures arranged with intervals along a circumferential direction around the rotation axis of the second synchronous component 32, and a recess is formed between adjacent protruding structures.

In this way, when the first synchronous component 31 and the second synchronous component 32 rotate synchronously, the first clamping component 341 will abut against recesses or protrusions formed by the cam structure 302 of the first protrusion part 311 and the cam structure 302 of the second protrusion part 321, and the second clamping component 342 will abut against recesses or protrusions formed by the cam structure 302 of the third protrusion part 312 and the cam structure 302 of the fourth protrusion part 322, thereby realizing a hovering effect during rotation, improving the user's hand feeling during rotation, and providing a better experience.

In addition, to ensure that the first clamping component 341 and the second clamping component 342 can more easily abut against the aforementioned cam structures 302, as shown in FIG. 6, the first clamping component 341 and the second clamping component 342 have protrusions on their sides close to the cam structures 302, so as to better cooperate with the cam structures 302.

Continuing to refer to FIG. 6, to ensure that the first synchronous component 31 and the second synchronous component 32 can be rotationally connected with the connecting component 33, in some embodiments, the connecting component 33 may include a first connecting shaft 35, a second connecting shaft 36, a first connecting component 37, and a second connecting component 38. The first connecting shaft 35 passes through the first protrusion part 311 and the third protrusion part 312, and an extension direction of the first connecting shaft 35 is parallel to the rotation axis of the first synchronous component 31. The second connecting shaft 36 passes through the second protrusion part 321 and the fourth protrusion part 322, and an extension direction of the second connecting shaft 36 is parallel to the rotation axis of the second synchronous component 32.

The first connecting component 37 is located on a side of the first protrusion part 311 and the second protrusion part 321 away from the elastic assembly 34, and is connected with the first connecting shaft 35 and the second connecting shaft 36. The second connecting component 38 is located on a side of the third protrusion part 312 and the fourth protrusion part 322 away from the elastic assembly 34, and is connected with the first connecting shaft 35 and the second connecting shaft 36.

Thus, the first synchronous component 31 may rotate around the first connecting shaft 35, and the second synchronous component 32 may rotate around the second connecting shaft 36. Since both the first connecting shaft 35 and the second connecting shaft 36 are connected with the first connecting component 37 and the second connecting component 38, in this way, the first connecting shaft 35 and the second connecting shaft 36 are connected with each other by the first connecting component 37 and the second connecting component 38, so that the first synchronous component 31 and the second synchronous component 32 are connected with each other.

As shown in FIG. 6, when the elastic component 343 is two springs, these two elastic components 343 may be fitted over the outside of the first connecting shaft 35 and the second connecting shaft 36, respectively. In this way, the two elastic components 343 may be fixed by the first connecting shaft 35 and the second connecting shaft 36, so that the elastic components 343 do not move.

In some embodiments, as shown in FIG. 6, the first connecting component 37 may be provided with a first clearance hole 371 and a second clearance hole 372. The second connecting component 38 may be provided with a third clearance hole 381 and a fourth clearance hole 382. The first connecting shaft 35 may include a first shaft body 351, a first fixing part 352 and a second fixing part 353.

The first shaft body 351 passes through the first protrusion part 311 and the third protrusion part 312, and is inserted into the first clearance hole 371 and the third clearance hole 381. The first fixing part 352 is connected with the first shaft body 351, is located on a side of the first connecting component 37 away from the first protrusion part 311, and abuts against the first connecting component 37. The second fixing part 353 is connected with the first shaft body 351, is located on a side of the second connecting component 38 away from the third protrusion part 312, and abuts against the second connecting component 38. In this way, the first connecting shaft 35 does not fall off from the first connecting component 37 and the second connecting component 38 along an extension direction of the first connecting shaft 35, so that the first connecting shaft 35, and the first connecting component 37 and the second connecting component 38 are connected together.

Similarly, as shown in FIG. 6, the second connecting shaft 36 includes a second shaft body 361, a third fixing part 362, and a fourth fixing part 363. The second shaft body 361 passes through the second protrusion part 321 and the fourth protrusion part 322, and is inserted into the second clearance hole 372 and the fourth clearance hole 382. The third fixing part 362 is connected with the second shaft body 361, is located on a side of the first connecting component 37 away from the second protrusion part 321, and abuts against the first connecting component 37. The fourth fixing part 363 is connected with the second shaft body 361, is located on a side of the second connecting component 38 away from the fourth protrusion part 322, and abuts against the second connecting component 38. In this way, the second connecting shaft 36 does not fall off from the first connecting component 37 and the second connecting component 38 along an extension direction of the second connecting shaft 36, so that the second connecting shaft 36, and the first connecting component 37 and the second connecting component 38 are connected together.

To facilitate the passing of the first connecting shaft 35 through the first protrusion part 311 and the third protrusion part 312, as shown in FIG. 7, both the first protrusion part 311 and the third protrusion part 312 are provided with a fifth clearance hole 313, and the first connecting shaft 35 may pass through the first protrusion part 311 and the third protrusion part 312 through the fifth clearance hole 313.

Similarly, the second protrusion part 321 and the fourth protrusion part 322 may be provided with a sixth clearance hole (not shown in the figures), to facilitate the passing of the second connecting shaft 36 through the second protrusion part 321 and the fourth protrusion part 322.

In some embodiments, as shown in FIG. 6, a side of the second connecting component 38 is formed with a first notch and a second notch arranged with an interval. The first notch and the second notch form the aforementioned third clearance hole 381 and fourth clearance hole 382. An opening size of the first notch is smaller than a size of the first shaft body 351, and an opening size of the second notch is smaller than a size of the second shaft body 361.

In this way, when installing the first connecting shaft 35, the first connecting shaft 35 may sequentially pass through the first clearance hole 371 of the first connecting component 37, and the fifth clearance holes 313 (as shown in FIG. 7) of the first protrusion part 311 and the third protrusion part 312. Then, by using the third clearance hole 381 on the second connecting component 38, the second connecting component 38 is securely engaged into the first shaft body 351. Since the opening size of the first notch is smaller than the size of the first shaft body 351, the first shaft body 351 will not fall out of the first notch.

Similarly, when installing the second connecting shaft 36, the second connecting shaft 36 may sequentially pass through the second clearance hole 372 of the first connecting component 37, and the fifth clearance holes (not shown in the figures) of the second protrusion part 321 and the fourth protrusion part 322. Then, by using the fourth clearance hole 382 on the second connecting component 38, the second connecting component 38 is securely engaged into the second shaft body 361.

As shown in FIG. 5, the support plate 10 may include a fixing plate 11, and the fixing plate may be used to fix the synchronous torsion module 30. A side of the first synchronous component 31 shown in FIG. 6 connected with the first connecting shaft 35, and a side of the second synchronous component 32 connected with the second connecting shaft 36, are located on the fixing plate 11 shown in FIG. 5.

To ensure that the first synchronous component 31 and the second synchronous component 32 can be installed on the fixing plate 11, in some embodiments, as shown in FIG. 5, the hinge mechanism 100 may also include a plurality of covering plates 50, and the covering plate 50 is connected with the fixing plate 11.

As shown in FIG. 5, the hinge mechanism 100 may include a plurality of synchronous torsion modules 30, and the plurality of synchronous torsion modules 30 are arranged with intervals along an extension direction of the fixing plate 11, and fixed on the fixing plates 11 by a plurality of covering plates 50.

As shown in FIG. 5, according to the different positions of the covering plates 50, the plurality of covering plates 50 may include two first covering plates 51 and a second covering plate 52 located between the two first covering plates 51.

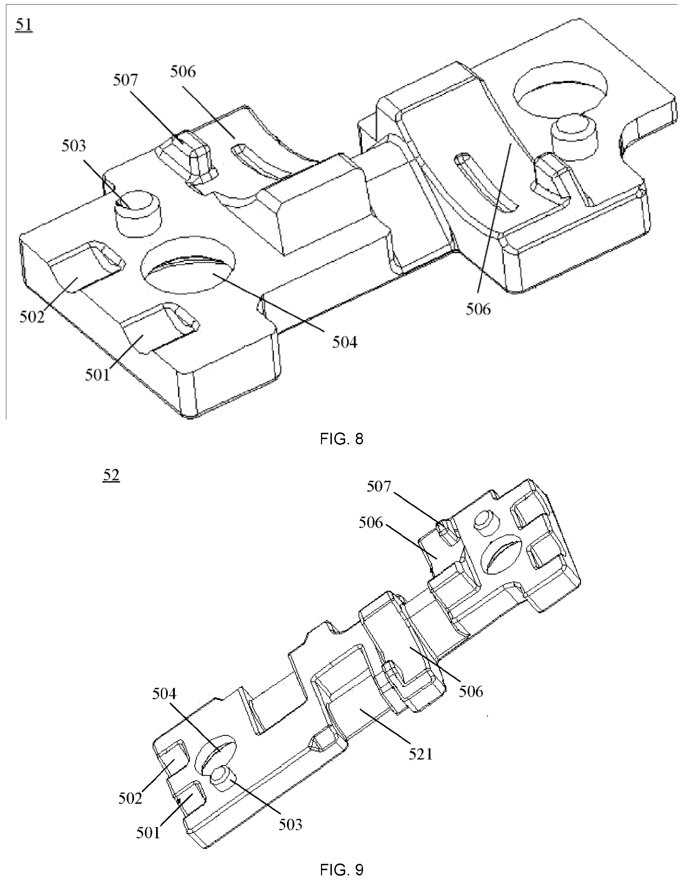

As shown in FIG. 8, FIG. 8 is a schematic diagram of an overall structure of a side of the first covering plate 51 shown in FIG. 5 close to the fixing plate 11 (as shown in FIG. 5), and a side of an upper covering plate 50 close to the fixing plate 11 (as shown in FIG. 5) has a first fixing groove 501 and a second fixing groove 502. The first fixing groove 501 may be used to fix an end of the first connecting shaft 35 (as shown in FIG. 6), and the second fixing groove 502 may be used to fix an end of the second connecting shaft 36 (as shown in FIG. 6).

Similarly, as shown in FIG. 9, FIG. 9 is schematic diagram of an overall structure of a side of a second covering plate 52 shown in FIG. 5 close to a fixing plate 11 (as shown in FIG. 5). The side of the second covering plate 52 close to the fixing plate 11 (as shown in FIG. 5) also has the aforementioned first fixing groove 501 and second fixing groove 502. The first fixing groove 501 may be used to fix an end of the first connecting shaft 35 (as shown in FIG. 6), and the second fixing groove 502 may be used to fix an end of the second connecting shaft 36 (as shown in FIG. 6).

Two ends of the first connecting shaft 35 may be located in the first fixing grooves 501 of the adjacent two covering plates 50 (i.e., the first covering plate 51 and the second covering plate 52) respectively, and two ends of the second connecting shaft 36 are located in the second fixing grooves 502 of the adjacent two covering plates 50 (the first covering plate 51 and the second covering plate 52) respectively.

In this way, through the first fixing groove 501 and the second fixing groove 502 of the covering plates 50, installation positions may be provided for the first connecting shaft 35 and the second connecting shaft 36, so that the two ends of the first connecting shaft 35 and the two ends of the second connecting shaft 36 may be clamped between the covering plate 50 and the fixing plate 11, thereby enabling that the first synchronous component 31 and the second synchronous component 32 can be arranged on the fixing plate 11 for folding and unfolding.

As mentioned above, since the first covering plate 51 and the second covering plate 52 are arranged at different positions, the number of first fixing grooves 501 and second fixing grooves 502 on the first covering plate 51 and the second covering plate 52 differs. As shown in FIG. 8, the first covering plate 51 may have one first fixing groove 501 and one second fixing groove 502. As shown in FIG. 9, the second covering plate 52 may have two first fixing grooves 501 and two second fixing grooves 502.

Meanwhile, to facilitate the positioning of the covering plate 50, as shown in FIG. 8 and FIG. 9, a side of the first covering plate 51 and the second covering plate 52 close to the fixing plate 11 (as shown in FIG. 5) have covering plate-positioning pillars 503. Correspondingly, the fixing plate 11 is provided with corresponding positioning grooves or positioning holes. In this way, when installing the first covering plate 51 and the second covering plate 52, the first covering plate 51 and the second covering plate 52 may be arranged at corresponding positions by the covering plate-positioning pillars 503, so that the installation is more convenient.

As shown in FIG. 8 and FIG. 9, the first covering plate 51 and the second covering plate 52 are also provided with covering plate-installing holes 504. Correspondingly, the fixing plate 11 (as shown in FIG. 5) is also provided with corresponding installing holes (not shown in the figures).

As shown in FIG. 5, the hinge mechanism 100 may also include a screw 60. The screw 60 may be inserted into the covering plate-installing hole 504 (as shown in FIG. 8) of the covering plate 50 and the installing hole of the fixing plate 11, and has a threaded connection with the covering plate 50 and the fixing plate 11. In this way, the covering plate 50 is fixed on the fixing plate 11 by the screw 60.

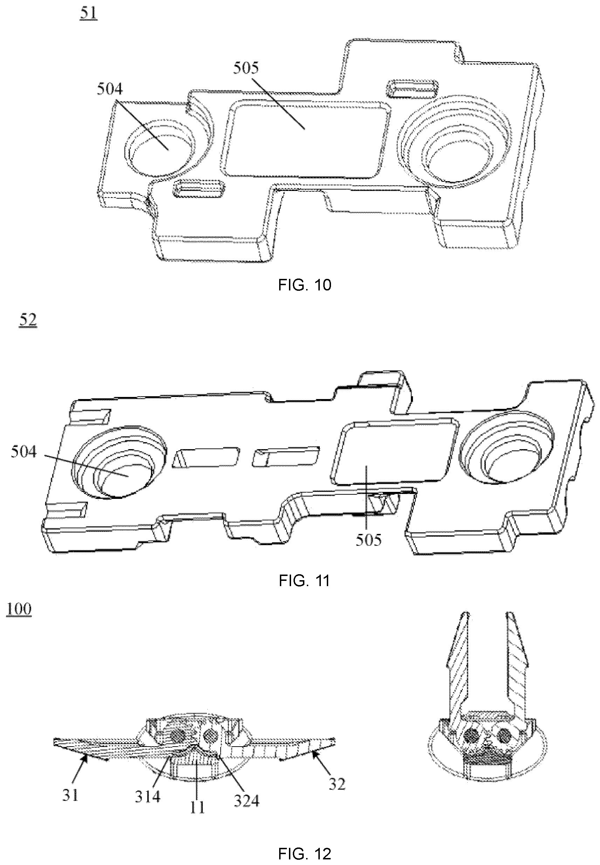

As shown in FIG. 10 and FIG. 11, FIG. 10 is a schematic diagram of an overall structure of the first covering plate 51 shown in FIG. 8 on another side, and FIG. 11 is a schematic diagram of an overall structure of the second covering plate 52 as shown in FIG. 9 on another side. A side of the first covering plate 51 and a side of the second covering plate 52 away from the fixing plate 11 (as shown in FIG. 5) have glue-dispensing grooves 505.

In addition, in order to limit the rotation angle of the first synchronous component 31 and the second synchronous component 32, as shown in FIG. 6, a side of the first synchronous component 31 close to the first connecting shaft 35 has a first abutting protrusion 314, and a side of the second synchronous component 32 close to the second connecting shaft 36 has a second abutting protrusion 324.

In this way, as shown in FIG. 12, FIG. 12 is a schematic diagram of a positional relationship of the first synchronous component 31 and the second synchronous component 32 with the fixing plate 11 when the hinge mechanism 100 is in a display state and a folded state, and when the hinge mechanism 100 is in the unfolded state, the first abutting protrusion 314 and the second abutting protrusion 324 abut against the fixing plate 11, to limit further rotation of the first synchronous component 31 and the second synchronous component 32, thereby limiting the rotation.

As shown in FIG. 5, the plurality of support plates 10 may also include a first connecting plate 12 and a second connecting plate 13. When the hinge mechanism 100 is in the unfolded state, the first connecting plate 12 and the second connecting plate 13 may be located on two sides of the fixing plate 11. The first connecting plate 12 may be connected with a part of the flexible screen (not shown in the figures), and the second connecting plate 13 may be connected with another part of the flexible screen (not shown in the figures). The first connecting plate 12 and the second connecting plate 13 may be used to drive the folding of the flexible screen (not shown in the figures).

To realize synchronous rotation of the first connecting plate 12 and the second connecting plate 13, as shown in FIG. 6, a side of the first synchronous component 31 away from the first connecting shaft 35 has a first slider 315, and a side of the second synchronous component 32 away from the second connecting shaft 36 has a second slider 325.

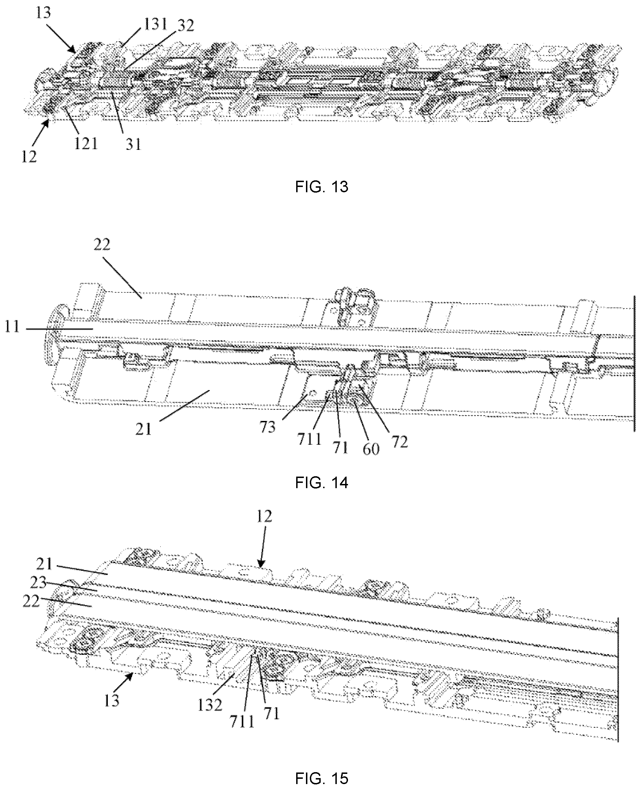

Correspondingly, as shown in FIG. 13, FIG. 13 is a schematic diagram of an overall structure of a side of a first connecting plate 12 and a second connecting plate 13 close to a first synchronous component 31 and a second synchronous component 32, and a side of the first connecting plate 12 is formed with a first sliding groove 121. A first slider 315 (as shown in FIG. 6) is located within the first sliding groove 121, and is slidably connected with the first connecting plate 12 along a direction perpendicular to the rotation axis of the first synchronous component 31.

A second sliding groove 131 is formed on a side of the second connecting plate 13, and a second slider 325 (as shown in FIG. 6) is located within the second sliding groove 131, and is slidably connected with the second connecting plate 13 along a direction perpendicular to the rotation axis of the second synchronous component 32.

In this way, when the first synchronous component 31 and the second synchronous component 32 rotate synchronously, the first slider 315 and the second slider 325 will slide within the first sliding groove 121 and the second sliding groove 131, respectively, and apply force to a groove wall of the first sliding groove 121 and a groove wall of the second sliding groove 131, so that the first connecting plate 12 and the second connecting plate 13 can rotate synchronously, accordingly. Thus, with the synchronous rotation of the first connecting plate 12 and the second connecting plate 13, the flexible screen may also be folded and unfolded synchronously.

When the hinge mechanism 100 is applied to an outer-folding screen phone, the first connecting plate 12 and the second connecting plate 13 will slide a certain amount with respect to the first synchronous component 31 and the second synchronous component 32, and generate an amount of displacement. Therefore, as shown in FIG. 13, the first sliding groove 121 and the second sliding groove 131 may be arranged at an incline. When the first connecting plate 12 and the second connecting plate 13 rotate, they can slide and generate a certain amount of displacement.

As shown in FIG. 4, a plurality of decorative plates 20 may include a first decorative plate 21, a second decorative plate 22, and a third decorative plate 23. The third decorative plate 23 may be connected with the fixing plate 11. When the hinge mechanism 100 is in a display state, the first decorative plate 21 may be arranged opposite the first connecting plate 12, and the second decorative plate 22 may be arranged opposite the second connecting plate 13. The first decorative plate 21 and the second decorative plate 22 may be used to cover the synchronous torsion module 30 (as shown in FIG. 5) and the synchronous connecting assembly 40 (as shown in FIG. 5).

As shown in FIG. 14, FIG. 14 is a schematic diagram of connection of a first synchronous connecting component 71 with a first decorative plate 21 and a second decorative plate 22. The hinge mechanism 100 also includes a plurality of first synchronous connecting components 71, an end of the first synchronous connecting components 71 is rotationally connected with the fixing plate 11, and the rotation axis of the first synchronous connecting component 71 is parallel to the rotation axis of the first synchronous component 31 (as shown in FIG. 13). The first decorative plate 21 is connected with a part of the first synchronous connecting component 71, and the second decorative plate 22 is connected with another part of the first synchronous connecting component 71.

As shown in FIG. 14, a part of the first synchronous connecting component 71 is arranged opposite the first decorative plate 21, and another part of the first synchronous connecting component 71 is arranged opposite the second decorative plate 22. The first synchronous connecting component 71 arranged opposite the first decorative plate 21 is connected with the first decorative plate 21, and the first synchronous connecting component 71 arranged opposite the second decorative plate 22 is connected with the second decorative plate 22, so that the first decorative plate 21 and the second decorative plate 22 rotate when being driven by the first synchronous connecting components 71.

To realize the synchronous rotation of the first decorative plate 21 and the second decorative plate 22, as shown in FIG. 14, another end of the first synchronization component 31 is formed with a connecting slider 711. Correspondingly, as shown in FIG. 15, FIG. 15 is a schematic diagram of an overall structure of a side of a first connecting plate 12 and a side of a second connecting plate 13 close to a first decorative plate 21 and a second decorative plate 22, a side of the first connecting plate 12 is formed with a third sliding groove (not shown in the figures), and a side of the second connecting plate 13 is formed with a fourth sliding groove 132.

A part of the connecting slider 711 of the first synchronous connecting component 71 is located in the third sliding groove, and is slidably connected with the first connecting plate 12 along a direction perpendicular to the rotation axis of the first synchronous component 31. Another part of the connecting slider 711 of the first synchronous connecting component 71 is located in the fourth sliding groove 132, and is slidably connected with the second connecting plate 13 along a direction perpendicular to the rotation axis of the second synchronous component 32.

As can be seen from the above, the first decorative plate 21 and the first connecting plate 12 are arranged opposite each other, and the second decorative plate 22 and the second connecting plate 13 are arranged opposite each other. Correspondingly, the connecting slider 711 of the first synchronous connecting component 71 connected with the first decorative plate 21 may be located in the third sliding groove of the first connecting plate, and the connecting slider 711 of the first synchronous connecting component 71 connected with the second decorative plate 22 may be located in the fourth sliding groove 132.

In this way, an end of the first synchronous connecting component 71 is rotationally connected with the fixing plate 11, and another end of the first synchronous connecting component 71 is slidably connected with the first connecting plate 12 or the second connecting plate 13, and the first synchronous connecting component 71 can rotate synchronously with the rotation of the first connecting plate 12 and the second connecting plate 13. Since the first decorative plate 21 and the second decorative plate 22 are connected with a plurality of first synchronous connecting components 71, the first decorative plate 21 and the second decorative plate 22 may rotate synchronously when being driven by the first connecting plate 12 and the second connecting plate 13.

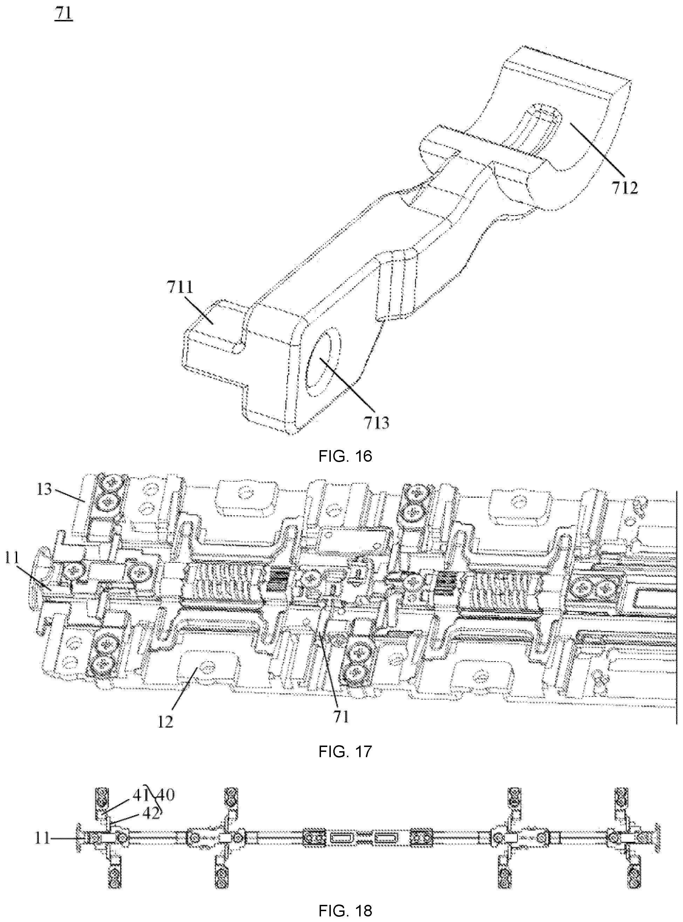

In some embodiments, as shown in FIG. 9, the second covering plate 52 has a plurality of synchronous shafts 521. An extension direction of the synchronous shaft 521 is parallel to the extension direction of the rotation axis of the first synchronous component 31 (as shown in FIG. 13). Correspondingly, as shown in FIG. 16, FIG. 16 is a schematic diagram of an overall structure of a first synchronous connecting component 71 according to some embodiments, and an end of the first synchronous connecting component 71 is formed with a first arc groove 712.

In this way, an end of the first synchronous connecting component 71 may be located between the synchronous shaft 521 and the fixing plate 11, and a groove wall of the first arc groove 712 is arranged around the synchronous shaft 521. Thus, by the first arc groove 712, an end of the first synchronous connecting component 71 can rotate around the connecting shaft.

It can be understood that a synchronous shaft 521 may also be arranged on the first covering plate 51, and for example, the structure of the covering plate 50 may be adjusted according to the arranged position of the first synchronous connecting component 71. Exemplarily, as shown in FIG. 17, FIG. 17 is a schematic diagram of an overall structure when a first synchronous connecting component 71 is installed on a fixing plate 11 and a first connecting plate 12, and the first synchronous connecting component 71 is located in a middle position of the fixing plate 11. Therefore, as shown in FIG. 9, the second covering plate 52 is provided with a synchronous shaft 521 that cooperates with the first synchronous connecting component 71 (as shown in FIG. 17).

In some embodiments, as shown in FIG. 14, the hinge mechanism 100 may also include a decorative plate-fixing block 72 and a decorative plate-fixing piece 73. The decorative plate-fixing block 72 is fixedly connected with the first synchronous connecting component 71 via the screw 60. The decorative plate-fixing piece 73 is connected with the decorative plate-fixing block 72 via the screw 60, and the decorative plate-fixing piece 73 may be bonded to the first decorative plate 21 or the second decorative plate 22 by dispensing glue.

In this way, the first decorative plate 21 and the second decorative plate 22 are connected with the first synchronous connecting component 71, by the decorative plate-fixing block 72 and decorative plate-fixing piece 73. Of course, the first decorative plate 21 and the second decorative plate 22 may also be directly connected with the first synchronous connecting component 71.

As shown in FIG. 2, a plurality of support plates 10 may also include a first idler plate 14 and a second idler plate 15. When the hinge mechanism 100 is in an unfolded state, the first idler plate 14 may be located between the first connecting plate 12 and the fixing plate 11, and the second idler plate 15 may be located between the second connecting plate 13 and the fixing plate 11. The first idler plate 14 and the second idler plate 15 may also be used to support and fix the flexible screen.

The synchronous connecting assembly 40 may be used to make the first idler plate 14 and the second idler plate 15 rotate synchronously. As shown in FIG. 5, the number of synchronous connecting assembly 40 is multiple.

In some embodiments, as shown in FIG. 18, FIG. 18 is a schematic diagram of connection of a synchronous connecting assembly 40 with a fixing plate 11, and the synchronous connecting assembly 40 includes a second synchronous connecting component 41 and a third synchronous connecting component 42. As shown in FIG. 5, a part of the second synchronous connecting component 41 is connected with the first connecting plate 12, and another part of the second synchronous connecting component 41 is connected with the second connecting plate 13.

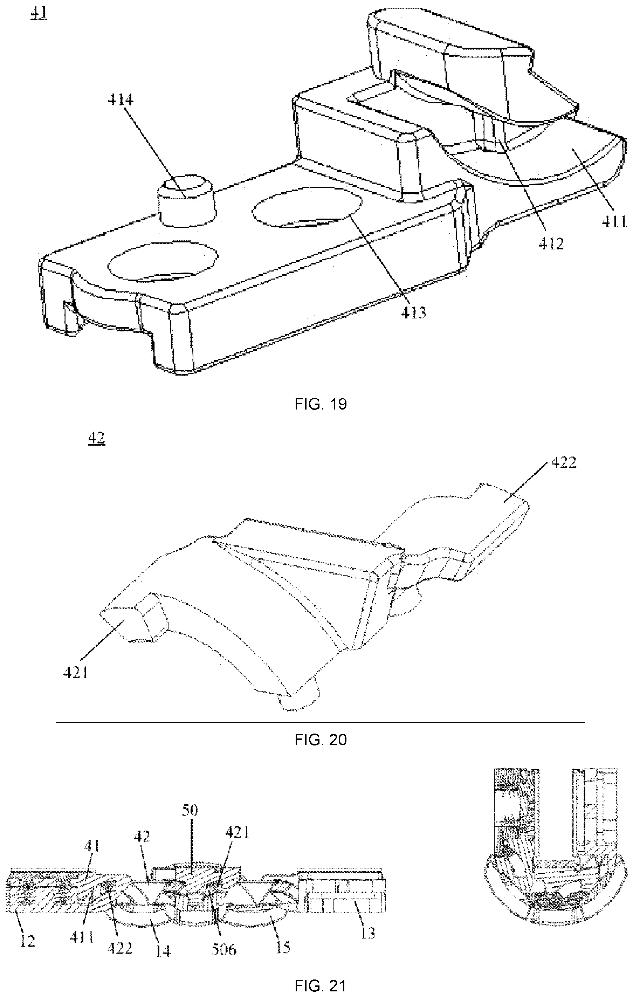

As shown in FIG. 8 and FIG. 9, a side of the first covering plate 51 and the second covering plate 52 close to the fixing plate 11 (as shown in FIG. 5) is formed with a plurality of second arc grooves 506. As can be seen from FIG. 5, the whole of the hinge mechanism 100 is a symmetrical structure; therefore, exemplarily, as shown in FIG. 8 and FIG. 9, the first covering plate 51 and the second covering plate 52 each form two second arc grooves 506. Meanwhile, as shown in FIG. 19, FIG. 19 is a schematic diagram of an overall structure of a second synchronous connecting component 41 according to some embodiments, and a side of the second synchronous connecting component 41 close to the first connecting plate 12 or the second connecting plate 13 is formed with a third arc groove 411.

Correspondingly, as shown in FIG. 20, FIG. 20 is a schematic diagram of an overall structure of a third synchronous connecting component 42 according to some embodiments, and the third synchronous connecting component 42 has a first limiting protrusion 421 and a second limiting protrusion 422.

As shown in FIG. 21, FIG. 21 is a sectional view of a second synchronous connecting component 41 and a third synchronous connecting component 42 when the hinge mechanism 100 is in an unfolded state and a folded state, the first limiting protrusion 421 and the second limiting protrusion 422 of the third synchronous connecting component 42 are rotationally connected into the second arc groove 506 and the third arc groove 411, respectively, and a rotation axis of the third synchronous connecting component 42 is parallel to the rotation axis of the first synchronous component 31 (as shown in FIG. 5). In this way, when the first connecting plate 12 and the second connecting plate 13 rotate, they will drive the third synchronous connecting component 4t2 to rotate synchronously.

The first idler plate 14 is connected with a part of the third synchronous connecting component 42, and the second idler plate 15 is connected with another part of the third synchronous connecting component 42. Exemplarily, the first idler plate 14 and the second idler plate 15 may be connected with the third synchronous connecting component 42 by welding.

Therefore, since the third synchronous connecting component 42 rotates when being driven by the first connecting plate 12 and the second connecting plate 13, and the first idler plate 14 and the second idler plate 15 are connected with the third synchronous connecting component 42, the first idler plate 14 and the second idler plate 15 may rotate synchronously when being driven by the third synchronous connecting component 42.

It can be understood that, as shown in FIG. 5, a part of the third synchronous connecting 42 is arranged opposite the first idler plate 14, and another part of the third synchronous connecting component 42 is arranged opposite the second idler plate 15. The third synchronous connecting component 42 arranged opposite the first idler plate 14 may be connected with the first idler plate 14, and the third synchronous connecting component 42 arranged opposite the second idler plate 15 may be connected with the second idler plate 15, so as to drive the rotation of the first idler plate 14 and the second idler plate 15.

In addition, as shown in FIG. 8 and FIG. 9, the second arc groove 506 has a third limiting protrusion 507, and the third arc groove 411 has a fourth limiting protrusion 412. The third limiting protrusion 507 may be used to abut against the first limiting protrusion 421, to limit its rotation within the second arc groove 506. The fourth limiting protrusion 412 may be used to abut against the second limiting protrusion 422, to limit its rotation within the third arc groove 411, thereby limiting the amount of displacement of the first connecting plate 12 (as shown in FIG. 5) and the second connecting plate 13 (as shown in FIG. 5), and ensuring consistency of the size of the hinge mechanism during the folding and the unfolding.

It can be understood that, as shown in FIG. 1, when the hinge mechanism 100 is in the unfolded state, the first connecting plate 12 and the second connecting plate 13 are located on two sides of the fixing plate 11, and the first idler plate 14 and the second idler plate 15 are also located on two sides of the fixing plate 11. Therefore, referring to FIG. 5, a plurality of synchronous connecting assemblies 40 are also distributed on two sides of the fixing plate 11, and a plurality of synchronous connecting assemblies 40 on a side are connected with the first connecting plate 12 and the first idler plate 14, and synchronous connecting assemblies 40 on another side are connected with the second connecting plate 13 and the second idler plate 15.

Based on the above description, referring to FIG. 5, there is a hinge mechanism 100 according to some embodiments, during folding and unfolding, the synchronous torsion module 30 may drive the first connecting plate 12 and the second connecting plate 13 to rotate synchronously, and then drive the flexible screen (not shown in the figures) to rotate synchronously, so that the neutral layer of the hinge mechanism 100 and the neutral layer of the flexible screen are on the same plane, and the neutral layer of the flexible screen is not affected, thereby improving the lifespan of the flexible screen. As shown in FIG. 5, by arranging a plurality of synchronous torsion modules 30, the force applied to the hinge mechanism 100 during the rotation is more well-distributed, the rotation is easier, and the overall rotation axis of the hinge mechanism 100 is located at the center position, thereby providing a better consistency perception during the rotation.

While as shown in FIG. 6, there is a synchronous torsion module 30 according to some embodiments, the first synchronous component 31 engages with the second synchronous component 32 by the gear structure 301, thereby ensuring that the first synchronous component 31 and the second synchronous component 32 rotate synchronously. Meanwhile, the elastic assembly 34 of the synchronous torsion module 30 provides force during the rotation, thereby improving user's hand feeling. Thus, the synchronous torsion module 30 shown in FIG. 6 realizes the merging of the synchronization module and the torsion module, reduces the number of parts of the hinge mechanism 100, and simplifies the structure of the hinge mechanism 100.

Referring to FIG. 21, the movement of the first limiting protrusion 421 within the second arc groove 506 and the movement of the second limiting protrusion 422 within the third arc groove 411 enable the first idler plate 14 and the second idler plate 15 to rotate synchronously with the first connecting plate 12 and the second connecting plate 13. Additionally, the third limiting protrusion 507 shown in FIG. 8 and the fourth limiting protrusion 412 shown in FIG. 19 may limit the displacement of the first limiting protrusion 421 and the second limiting protrusion 422, thereby limiting the amount of displacement of the first connecting plate 12 and the second connecting plate 13, and ensuring consistency of the size of the hinge mechanism 100 during the folding and the unfolding.

In addition, the first synchronous connecting component 71 shown in FIG. 16 may enable the first decorative plate 21 and the second decorative plate 22 to rotate synchronously with the rotation of the first connecting plate 12 and the second connecting plate 13, so as to cover the internal structure of the hinge mechanism 100 and ensure the overall appearance of the hinge mechanism 100.

The above description is merely specific implementations of the present disclosure, however, the scope of protection of the present disclosure is not limited thereto, and any changes or substitutions within the technical scope disclosed in the present disclosure should fall within the scope of protection of the present disclosure. Therefore, the scope of protection of the present disclosure should be determined based on the scope of protection of the claims.

## Claims

1. A hinge mechanism, **characterized by** comprising:
a first synchronous component, a side of which has a first protrusion part; the first protrusion part being formed with a gear structure;
a second synchronous component, a side of which has a second protrusion part; the second protrusion part being formed with a gear structure;
a connecting component, rotationally connected with the first synchronous component and the second synchronous component; wherein a rotation axis of the first synchronous component is parallel to a rotation axis of the second synchronous component, and the gear structure of the first protrusion part engages with the gear structure of the second protrusion part; and
an elastic assembly, abutting against at least one of the first synchronous component and the second synchronous component, and used to generate elastic deformation along an extension direction of the rotation axis of the first synchronous component during rotation of the first synchronous component and the second synchronous component.

2. The hinge mechanism according to claim 1, wherein a side on which the first protrusion part is located, further has a third protrusion part; the third protrusion part and the first protrusion part are arranged with an interval along the extension direction of the rotation axis of the first synchronous component;
a side on which the second protrusion part is located, further has a fourth protrusion part; the fourth protrusion part and the second protrusion part are arranged with an interval along the direction of the rotation axis of the second synchronous component;
wherein a part of the elastic assembly is located between the first protrusion part and the third protrusion part, and abuts against the first protrusion part and the third protrusion part; another part of the elastic assembly is located between the second protrusion part and the fourth protrusion part, and abuts against the second protrusion part and the fourth protrusion part; and the elastic assembly is used to generate elastic deformation along the extension direction of the rotation axis of the first synchronous component under pressure from the first protrusion part, the second protrusion part, the third protrusion part and the fourth protrusion part.

3. The hinge mechanism according to claim 2, wherein an end face of the first protrusion part and an end face of the third protrusion part that are close to each other, each have a cam structures; and an end face of the second protrusion part and an end face of the fourth protrusion part that are close to each other, each have a cam structure;
the elastic assembly comprises:
a first clamping component, wherein the first clamping component abuts against the cam structure of the first protrusion part and the cam structure of the second protrusion part;
an elastic component, located on a side of the first clamping component away from the first protrusion part and the second protrusion part, an end of the elastic component abutting against the first clamping component; and
a second clamping component, located on a side of the elastic component away from the first protrusion part and the second protrusion part, and abutting against another end of the elastic component; wherein the second clamping component abuts against the cam structure of the third protrusion part and the cam structure of the fourth protrusion part.

4. The hinge mechanism according to claim 2, wherein the connecting component comprises:
a first connecting shaft, passing through the first protrusion part and the third protrusion part, and an extension direction of the first connecting shaft being parallel to the rotation axis of the first synchronous component;
a second connecting shaft, passing through the second protrusion part and the fourth protrusion part, and an extension direction of the second connecting shaft being parallel to the rotation axis of the second synchronous component;
a first connecting component, located on a side of the first protrusion part and the second protrusion part away from the elastic assembly, and connected with the first connecting shaft and the second connecting shaft; and
a second connecting component, located on a side of the third protrusion part and the fourth protrusion part away from the elastic assembly, and connected with the first connecting shaft and the second connecting shaft.

5. The hinge mechanism according to claim 4, wherein the first connecting component is provided with a first clearance hole and a second clearance hole; the second connecting component is provided with a third clearance hole and a fourth clearance hole; and the first connecting shaft comprises:
a first shaft body, passing through the first protrusion part and the third protrusion part, and inserted into the first clearance hole and the third clearance hole;
a first fixing part, connected with the first shaft body, located on a side of the first connecting component away from the first protrusion part, and abutting against the first connecting component; and
a second fixing part, connected with the first shaft body, located on a side of the second connecting component away from the third protrusion part, and abutting against the second connecting component;
the second connecting shaft comprises:
a second shaft body, passing through the second protrusion part and the fourth protrusion part, and is inserted into the second clearance hole and the fourth clearance hole;
a third fixing part, connected with the second shaft body, located on a side of the first connecting component away from the second protrusion part, and abutting against the first connecting component; and
a fourth fixing part, connected with the second shaft body, located on a side of the second connecting component away from the fourth protrusion part, and abutting against the second connecting component.

6. The hinge mechanism according to claim 5, wherein a side of the second connecting component is formed with a first notch and a second notch that are arranged with an interval; the first notch and the second notch form the third clearance hole and the fourth clearance hole;
wherein an opening size of the first notch is smaller than a size of the first shaft body; and an opening size of the second notch is smaller than a size of the second shaft body.

7. The hinge mechanism according to claim 4, wherein the hinge mechanism further comprises:
a fixing plate, a side of the first synchronous component connected with the first connecting shaft and a side of the second synchronous component connected with the second connecting shaft being located on the fixing plate; and
a plurality of covering plates, connected with the fixing plate; a side of the covering plate close to the fixing plate has a first fixing groove and a second fixing groove;
wherein two ends of the first connecting shaft are respectively located in first fixing grooves of adjacent two of the covering plates; two ends of the second connecting shaft are respectively located in second fixing grooves of adjacent two of the covering plates.

8. The hinge mechanism according to claim 7, wherein a side of the first synchronous component away from the first connecting shaft has a first slider; and a side of the second synchronous component away from the second connecting shaft has a second slider;
the hinge mechanism further comprises:
a first connecting plate, a side of which is formed with a first sliding groove; wherein the first slider is located in the first sliding groove and is slidably connected with the first connecting plate along a direction perpendicular to the rotation axis of the first synchronous component; and
a second connecting plate, a side of which is formed with a second sliding groove; wherein the second slider is located in the second sliding groove and is slidably connected with the second connecting plate along a direction perpendicular to the rotation axis of the second synchronous component.

9. The hinge mechanism according to claim 8, wherein the hinge mechanism further comprises:
a plurality of first synchronous connecting components, wherein an end of the first synchronous connecting component is rotationally connected with the fixing plate, and an rotation axis of the first synchronous connecting component is parallel to the rotation axis of the first synchronous component; another end of the first synchronous connecting component is formed with a connecting slider;
a first decorative plate, connected with a part of the first synchronous connecting component; and
a second decorative plate, connected with another part of the first synchronous connecting component;
wherein a side of the first connecting plate is formed with a third sliding groove; a side of the second connecting plate is formed with a fourth sliding groove;
a part of the connecting slider of the first synchronous connecting component is located in the third sliding groove, and is slidably connected with the first connecting plate along a direction perpendicular to the rotation axis of the first synchronous component; and another part of the connecting slider of the first synchronous connecting component is located in the fourth sliding groove, and is slidably connected with the second connecting plate along a direction perpendicular to the rotation axis of the second synchronous component.

10. The hinge mechanism according to claim 9, wherein the covering plate has a plurality of synchronous shafts; an extension direction of the synchronous shaft is parallel to the extension direction of the rotation axis of the first synchronous component;
an end of the first synchronous connecting component is located between the synchronous shaft and the fixing plate to form a first arc groove; a groove wall of the first arc groove is arranged around the synchronous shaft.

11. The hinge mechanism according to claim 8, wherein a side of the covering plate close to the fixing plate is formed with a plurality of second arc grooves; the hinge mechanism further comprises:
a plurality of second synchronous connecting components, a part of which is connected with the first connecting plate and another part of which is connected with the second connecting plate; wherein a side of the second synchronous connecting components close to the first connecting plate or the second connecting plate is formed with a third arc groove;
a plurality of third synchronous connecting components, having a first limiting protrusion and a second limiting protrusion; wherein the first limiting protrusion and the second limiting protrusion of the third synchronous connecting component are rotationally connected into the second arc groove and the third arc groove, respectively, and a rotation axis of the third synchronous connecting component is parallel to the rotation axis of the first synchronous component;
a first idler plate, connected with a part of the third synchronous connection; and
a second idler plate, connected with another part of the third synchronous connecting component.

12. An electronic device, **characterized by** comprising a flexible screen and the hinge mechanism according to any one of claims 1 to 11; wherein the flexible screen is located on a side of the hinge mechanism, a part of the flexible screen is connected with the first synchronous component, and another part of the flexible screen is connected with the second synchronous component.
